# EUROPEAN PATENT APPLICATION

(11) **EP 4 741 881 A1**
(43) Date of publication of application: **13.05.2026**
(21) Application number: 25383173.9
(22) Date of filing: 29.10.2025
(51) Int. Cl.: G01S 19/17, G01S 19/48, G08B 25/01, H04W 4/029, H04W 4/90

(54) **GEOLOCATION SYSTEM AND METHOD IN DISTRESS SITUATIONS**

(30) Priority: 06.11.2024 ES 202430912
(71) Applicant: SENIOR TELECOMUNICACIONES Y SERVICIOS AVANZADOS, S.L., 28223 Pozuelo de Alarcón (Madrid) (ES)
(72) Inventor: CURA GONZÁLEZ, Jaime, 28223 Pozuelo de Alarcón (Madrid) (ES)
(74) Representative: Temiño Ceniceros, Ignacio

(57) **Abstract**

A geolocation system in distress situations comprising an electronic device (1) worn by a user with the particularity that it comprises an antenna for receiving signals from satellite systems (2), an antenna for receiving signals from access points (3), an antenna for sending and receiving mobile signals (4) for the transmission of position data, a charging dock (10) which is associated with the aforementioned electronic device and which has its location registered and has the particularity of comprising a WiFi type controller that emits an identification message and a network name to the electronic device; and a cloud platform (15) comprising an association database (16) between beacons and geographical position, and that is in connection with an assistance centre (17); and a geolocation method that is carried out with the aforementioned system.

## Description

### Object of the invention

The present invention relates to a new type of geolocation system in distress situations, specifically for users who are in a vulnerable situation, such as people living alone and/or people with mobility problems and, moreover, in remote or rural areas where there is no good telecommunications network coverage, and it is a system that allows an exact geolocation of the aforementioned user automatically. The invention also relates to a geolocation method based on the use of the system.

The invention falls within the industrial sector related to telecommunications and, more specifically, to systems and equipment for communicating distress signals.

### Background of the invention

It is well known that, in the context of this industrial sector, the technological developments in telecommunications that have been experienced over the last two decades have led to the availability of a wide variety of devices that allow wireless communication in practically any location on the planet. These advances enable the incorporation of mobile communications into new devices, including those intended for emergency or distress signal propagation.

Specifically, developments based on such devices that are or can be permanently connected and/or send signals wirelessly make it possible to open up new potential solutions to problems that were previously very limited. Thus, the development and use of electronic watches, bracelets or pendants that are permanently connected even when the users of these devices are not in their homes or near wired network access points is well known.

It is well known that the mobility enabled by these devices makes it feasible that, when a person is away from home, they can call for help or call emergency services using a device the size of a watch or pendant; however, this introduces new challenges that were not present before. If users are able to move around and leave their homes with their devices, the call centres where requests for help are received cannot determine the location of the users.

As this is a key aspect of being able to offer assistance or emergency services, it becomes essential to find a solution to provide accurate location in any context of the device and by extension of the user of the device at all times.

In this respect, the types of solutions can be divided into three main groups: satellite geolocation systems (*Global Navigation Satellite System* or GNSS); beacon-based localization systems; and device communication network localization systems.

Satellite geolocation systems are characterised by providing a geographical position with the support of a satellite system orbiting around the planet. These satellites are permanently emitting information which, when it reaches a device prepared to detect these signals, allows it to triangulate its geographical position with an error range of less than 10 m. This accuracy is the highest of the three groups. Another advantage of this type of system is that the device has all the necessary information to triangulate its geographical position and does not require an external system. However, the major and serious drawbacks of satellite geopositioning systems are the high-power consumption required to process the satellite signal to calculate a position and that the devices must be in the line-of-sight of the satellites. This is a serious problem, as these systems stop working when the device is under a roof or inside any building, such as a user's home, a shopping centre, a hospital or a social centre.

Beacon geolocation systems are based on the identification of devices by radio signals, typically signals that follow standards such as Bluetooth or WiFi, although there are also solutions that use proprietary protocols in the bands using ISM (Industrial, Scientific, Medical) bands reserved for this type of application. In this case, the user device initiates the procedure by searching for signals emitted by a base station (beacon). The signal emitted by the beacons must contain a unique identifier that allows for the unambiguous identification of the corresponding beacon. With this information, the user device must search a database for the position of the beacon that is emitting that unique identifier and, by extension, the geographical position of the device that is capturing the beacon signal. The major advantages of this geographical localization method are its accuracy, which will depend on the number of devices and the reach of the signal emitted by the beacons and could exceed 5 m, it works both outdoors and indoors and its energy consumption can be very low when compared to satellite systems. However, the major disadvantages come in the deployment itself, the limitation of the location scope, since in order to locate, beacons must be installed, positions must be noted, and if the devices used as beacons are in motion, the data must be constantly updated, requiring additional effort that increases depending on the area in which the beacons are deployed and the mobility of the beacons. If, for example, WiFi access points are used as beacons, the access points of already deployed WiFi networks could be used to facilitate a possible initial installation covering large urban areas, and the challenge in the specific case of WiFi networks comes from maintaining and updating a database of all access points to be used as beacons, in addition to a device that is switched off, switched on, or moved such as in trains, buses or cars, is a particularly complex and unsolvable problem at present.

Location systems based on the communication network used by the user device use the same connection used by the device to send alerts to provide a location. This is the case for location services offered by mobile phone networks (GSM, Edge, LTE, etc.) or networks designed for loT devices (Sigfox, NB-loT, LTE-M, LoRa, etc.). In this case, the approach is similar to beacon systems, with the particularity that the identifier of the base station to which the device is currently connected is used. That is, each base station in the network becomes a beacon, from which the mobile device obtains a unique identifier and then transforms it into a geographic position using the base station database of the operator. The great advantage of this solution is that maintaining the base station database is a task that the operator is already obliged to perform. In addition, the user device, in order to provide a means of communication for the emergency signal, must always be connected to a base station of said network and therefore, without performing additional operations, it obtains the identifier of the base station to which is connected every time it sends o receives information. The major disadvantage of this system is that the accuracy of the location is very low, and the geographical positions obtained have an error that can be more than 10 km away from the real position. This makes it unfeasible for distress calls in remote areas.

Since none of the currently known solutions is feasible to establish a position at all times, emergency devices used by users must combine all available technologies, which is a major technical challenge when transitioning from one location technology to another. The technical problem for beacon geolocation is the construction and maintenance of a reliable database with which to geolocate a user. Solutions have been deployed using already available WiFi networks, mainly in medium and large municipalities. But this solution depends on the availability of existing WiFi networks, which is not common in small towns. In this situation the only two ways to identify the user's location are via the telecommunications network used by the device or a satellite system. In situations where only GNSS geolocation or the device's telecommunications network is available, when the device transitions from a position obtained by GNSS to a position obtained by the device's telecommunications network, extreme cases occur where the user moves from a very accurate position, while in the next instant they are kilometres away from their previous location. Therefore, the most common scenario for these devices is that people move with them outside their home at some point, at which time the ideal geolocation technology is satellite-based, and when they return home, they rely on beacon or communication network localization.

When there is no other means than the user's communication network to locate the device, particularly serious localization errors occur in the context of a device designed to launch emergency or distress signals, since the error range makes it impossible to determine whether the device is inside the user's home, potentially placing the location several kilometres away.

In addition, it is known that there are currently mobile devices that are equipped with geolocation systems that include satellite localization, beacon geolocation systems using the users' WiFi networks, as well as Bluetooth networks, and the mobile networks themselves that are commonly used in any mobile device that can be found on the market.

The most widely used mobile devices have Android or iOS based operating systems, which are permanently searching for WiFi or Bluetooth access points to add them to their databases. In this regard, the databases of the companies of the aforementioned operating systems that list the unique identifiers of the base stations and the geographic position of said stations are the most accurate created to date for geolocation by WiFi or Bluetooth access points. These mobile devices, generally smartphones, mix all available technologies to provide the most reliable and accurate position possible, however, they rely on their dominant position in the mobile phone market in order to obtain an accurate position. In addition, they use strategies with constant scanning and storage systems of base stations to generate their database system. The solution adopted by Google, which involves using cars to be able to maintain its database by associating WiFi access points with geographical positions, is well known. However, even when this huge amount of resources is used to achieve location where satellite geopositioning solutions are not feasible, these solutions do not work when population density is low, and the homes of the users do not have WiFi access points around them. In these situations, the devices only have available geolocation by satellite system or geolocation by the user's data network.

For the particular case of mobile emergency devices, efforts are made to carry out deployments using mobile geolocation supported by the geolocation database provided by Google. In using this database, it has been observed that in the circumstances described above (sparsely populated areas, without a high concentration of access points or base stations) the geolocation results became erratic and showed large jumps when the device of the user made the transition from being located using a satellite system to being indoors (in their home or other location without base stations or beacons) or vice versa. In these cases, due to the lack of accuracy of one device versus the other, the location from one position to the next could exhibit jumps of several kilometres, which causes the location, when the device launches an alert signal, to be insufficiently accurate to subsequently take emergency measures, for example, sending an ambulance or notifying the relatives of the user of the device at the provided location. One solution that has been proposed by technicians in this industrial sector is to deploy an independent beacon in homes or interiors where location is to be improved, with what this implies in terms of economy or efficiency, as it would involve having to use two independent devices, a beacon and a charger for the electronic device, which has been seen as inefficient and has been discarded.

As previously indicated, there is no known effective solution for establishing the position of an electronic emergency device at all times. Therefore, taking into account the problems and limitations existing in the prior art, the present invention is intended for mobile personal emergency devices with a geolocation solution that is particularly accurate in determining when the user of the device is at home and when he/she is away from home. The object of this invention is to provide a reliable geolocation solution that allows to obtain a reliable geographic position when the user enters and leaves his home, i.e. when he goes from obtaining his position through a satellite system to being able to obtain his position only through beacon systems or mobile networks and vice versa.

The applicant is not aware of any geolocation system in distress situations that is either similar to or as advantageous as the one described and claimed below.

### Description of the invention

The invention is a new type of geolocation system that solves, in its different embodiments, the above-mentioned problems and limitations present in the prior art. For this purpose, the system subject of the present invention comprises a portable user device, a charger with beacon function associated with the user device, and a cloud platform with a database of association between beacons and geographic position.

The wearable user device is a small electronic device, which can be a watch, a bracelet or a pendant, and which has the particularity of comprising at least three types of antennas to incorporate the described geolocation technologies, and two-way communication between the user and the assistance centres. This device is designed to be portable, preferably of small dimensions, allowing the user to keep it with him/her at all times while also ensuring it does not feel like a strange or new element. This element is key to preventing the user from tending to forget the device or feeling self-conscious about being seen with it in public.

Specifically, the device comprises at least three different antennas allow the user the minimum functionality to launch alerts while also needing to be located, where these antennas are essential for the entire system to function properly, and where these three antennas enable the electronic device:
- to receive signals from GPS, GLONASS, Galileo or Beidou satellite systems
- to receive signals from WiFi or Bluetooth access points.
- to send and receive mobile signals to send signalling data and maintain voice communication between an assistance centre and the user

The first of the antennas is used for the reception of satellite signals. These signals are used to provide accurate location when the user wears his/her device while in line-of-sight between the user and the satellites. The device, using the information provided by the satellites, triangulates its position and sends it through its data connection.

The second antenna receives information from WiFi or Bluetooth signals present in its environment. This antenna does not allow any signal to be sent, it is permanently scanning the ISM bands of the radio space for "beacon" and presentation messages from Bluetooth or WiFi networks that include the unique identifiers of that base station or beacon. In this case, the electronic device cannot obtain a definitive accurate location since it only obtains the identifiers of the access points and the received signal power of these access points. With this isolated information it is not possible to obtain a location, so the electronic watch only collects the information and then sends it through the mobile communication network. This is a major difference, since the electronic device cannot obtain its geographical position by itself, but needs instead an external service or database that can transform the information from the access point identifiers to a specific geographical position.

The third antenna is a mobile signal antenna that enables bidirectional communication, which allows it to launch alert events and subsequently maintain a conversation with an assistance centre, emergency unit, or family member who can respond to the alert message. This antenna can also be used to propagate the identifier of the base station that is serving this electronic device. Again, this information in isolation does not allow for geolocation of the device and a database must be used to translate the unique identifier of the base station to a geographic position and thus be able to associate this position with the electronic device.

The electronic device comprises a programmable control module, which manages the operation of the three aforementioned antennas.

The portable electronic device comprises at least one emergency push button that activates an alarm signal, in connection with the above-mentioned programmable control module. Additionally, the device can be equipped with emergency signals triggered by fall detection sensors, by pulsing and by leaving a predefined geographical area.

The portable electronic device further comprises a means of attachment to the user, such that it can be fastened to a user's wrist with a strap, in the case of a watch or bracelet; or to the neck with a strap, as in the case of a pendant.

The portable electronic device further comprises an electrical power supply module or rechargeable battery, which is the power source for the operation of the device. In this respect, the electronic device comprises electrical connectors.

The particularity of the electronic device subject of the present invention is that, being a portable element, it is both the element sought to be geolocated and the device that collects all the information within its reach, which is then used to obtain a specific geographical position, although it is not autonomous to determine that position by itself.

Another essential and novel element of the system is a charging dock, which is associated with the portable electronic device.

As previously mentioned, the power source of the device is an internal battery that is recharged through a dock that allows easily and simply coupling and picking up the device. This charging dock or charger is essential as the battery life of this type of device is usually between 1 and 7 days depending on the technology used for mobile communication and other usage and consumption factors. It is therefore an element that the user will need to use on a regular basis in order to re-establish the functionality of the electronic device.

In this sense, the charging dock of the present invention, in addition to the function of charging the electronic device, which is something known, has an additional and novel functionality, which is to constantly and permanently emit identification messages (hereinafter, "beacons") using the WiFi standard. This second functionality is not known to the applicant.

The charging of the electronic device is performed through a charger comprising two contact points with electrical connectors, preferably of the "Pogo" type, which allow the internal battery of the device to be charged.

Further, as previously mentioned, the dock has the particularity of including a WiFi type controller, which, as soon as it is connected to the power adapter, has the mission of emitting identification messages and a fictitious network name. These messages are sent every 60 milliseconds on channel 6 of the 2.4 Ghz band (range 2426 Mhz to 2448 Mhz). The controller, and therefore the charging dock, has registered its location and acts as a beacon

In this regard, the charging dock incorporates an electrical connector to the mains, preferably of the USB-C type, which powers both the watch charger and the WiFi controller.

Since this base is intended to be permanently connected in the user's home or place of residence, the electronic device, via the controller, can obtain the station's identification number or with the name referred to in the WiFi standard, the "BSSID" and the network name or "SSID".

The BSSID identifier is unique and can be composed of a maximum of 6 octets, the initial 3 octets correspond to the identifier of the company that created the controller and according to the identifier distribution provided by the "IEEE Registration Authority" (https://standards-oui.ieee.org/.)

The SSID identifier on the other hand is a completely arbitrary byte string with a maximum of 32 bytes. In this sense, a text string is established following the ASCII encoding standard. In a preferred embodiment of the invention, the string that is distributed as SSID is "BEACON-STSWG2N1".

The two identifiers described are essential in order to be able to determine that the identification message comes from the charging dock with beacon function. If both name and SSID identification as well as the OUI of the WiFi controller manufacturer do not match, this access point is interpreted as external to the system.

The controller does not allow any client connection, it only emits identification messages but does not act as an access point.

The charging dock is powered via a USB-C port located on the side of the dock. To power the dock, a USB-C cable is connected to a power supply, such as a power adapter or a compatible USB port. This power supply can preferably deliver up to 500ma on the 5v line through the USB-C connector.

Once connected, the charging dock starts emitting beacons on channel 6 of the 2.4 Ghz band, following the WiFi standard. These beacons include the unique identification of the WiFi controller (BSSID) as well as the name of the wireless network. At the same time, the charging dock is ready to be connected to the electronic device. The electronic device starts charging automatically when placed in the dock. The dock has magnets that secure the position of the device and are located inside the dock.

In this line, in a preferred embodiment of the invention, the dock is composed of an upper casing with entry and exit holes for screw fastening to a lower casing, with said union forming a closed casing. This also holds the controller to the top of the inside of the casing so that the alignment between the pogo-pin and USB-C holes that are on the board, and the outer casing does not move. The lower casing is fixed to the upper casing by means of screws at each corner thereof. The screws are hidden from the user under rubber sheets that serve to prevent damage to delicate surfaces such as glass or wood when the device is on them. On each side there are clips to attach an additional weight to provide stability to the entire base of the charger. This weight is a metal foil that adds up to 50g more weight.

On the other hand, in a preferred embodiment, the controller is associated with the power supply circuit of the dock. It has a USB-C port as its input, which provides at least the 5v line from the wall charger. As its output, in order to charge the electronic device, the "Pogo" type pins are used, which carry a continuous current of 5v and a maximum current of 500ma. Additionally, the controller is located furthest away from the charging pins, with a painted on-board antenna coming off the main board. The controller is fully protected inside the housing. Since a main board provides power to the controller, this controller does not need anything else to start emitting the necessary beacons in the 2.4 Ghz band.

Finally, another essential component of the system is a cloud computing platform comprising a database that registers the association between beacons and geographic positions, and which is in connection with an assistance centre and/or emergency services, where the platform comprises: means for receiving the data that the electronic device has captured, compiled and sent to the database; and a computer programme for geolocating the electronic device based on that data.

Geolocation based on beacons is only feasible if there is an element that can determine the geographical position of these beacons. The database is the element that makes it possible to determine, on the basis of all the information provided by the electronic device, what the position of the device is.

The platform with the database is equipped with means to receive the data that the electronic device has captured, compiled and sent to the database. This database, based on a computer programme, distinguishes between the following cases:
- the device sends a satellite position and has no BSSID/SSID corresponding to a beacon
- the device sends a satellite position and has a BSSID/SSID corresponding to a beacon
- the device does not send satellite position and sends a BSSID/SSID corresponding to a beacon
- the device does not send satellite position, nor does it send a BSSID/SSID corresponding to a beacon

The device always sends an identifier of the mobile network base station to which it is connected. This is always the case, since in order to send information it must be connected to a base station, and the base station identifier is key to being able to send and receive information. This is the key to overcoming the problems and limitations existing in the state of the art, and which allows for the detection of the geolocation in a distress situation of the electronic device in any telecommunication situation and context.

The invention also relates to a geolocation method that is based on the use of the previously indicated system, wherein the method for being able to identify the geographical position of the user comprises the steps of:
- sending a distress signal to the platform from the electronic device worn by the user;
- determining whether there is a satellite position
   ∘ if no, determining whether there is beacon data and performing geolocation using the position of the beacon
   ∘ if yes, determining whether there is beacon data, updating the position of the beacon, and performing geolocation using the satellite position and beacon position.

It should be noted that, although the charging dock is usually at the home or residence of the user, it is not uncommon for the user to take it with them whenever they are away for extended periods of time. For this reason, it is necessary to register not only the initial position of the charger acting as a beacon, but also any updates of its position.

The initial position of the beacon can be set manually and is updated whenever the electronic device has been able to obtain a satellite position concurrently with a beacon.

In contrast to any other system known in the state of the art, the present invention has the advantage that the error range of this system is that of the radio reach of the antenna of the charger dock or beacon, added to the error range of the satellite position, which usually leads to positions with an error of less than 50 m. This range reduces the positioning error compared to any other known in the state of the art, as well as allowing geolocation in any situation and/or in remote or rural areas where there is no good telecommunications network coverage.

It should be noted that in sparsely populated areas, it is quite normal that no WiFi network is found or detected in the vicinity. While the device is indoors, such as inside the home of a person or the own home of the user, satellite systems that allow accurate positioning are not feasible, and in the absence of other beacons, the only form of geolocation possible is from the communications antenna to which it is connected. As previously indicated, geolocation by the mobile antenna to which the user is connected can have error ranges of more than 10 km, so an error range of less than 50 m would give a much higher accuracy than any known solution in the state of the art.

The present invention, in addition to having the advantage that the error of the system remains below 50 m even when the user is at home or in his usual room, has the advantages over any other known system:
that it is not necessary to install other elements external to the system, such as WiFi access points, Bluetooth, or any other type of base station or beacon;
that, given that the charger dock is in a common location for the user, it is possible to determine when he/she arrives at / leaves this location; and
that, when the user is at home, i.e. It detects the beacon for a long period of time, it is possible to stop using satellite systems, with the resulting savings in energy consumption for the user device.

It should be noted that, throughout the description and claims, the term "comprises" and the variants thereof are not intended to exclude other technical features or additional elements.

### Brief description of the figures

In order to complete the description and to help a better understanding of the features of the invention, a set of figures and drawings is presented in which the following is represented by way of illustration and not limitation:

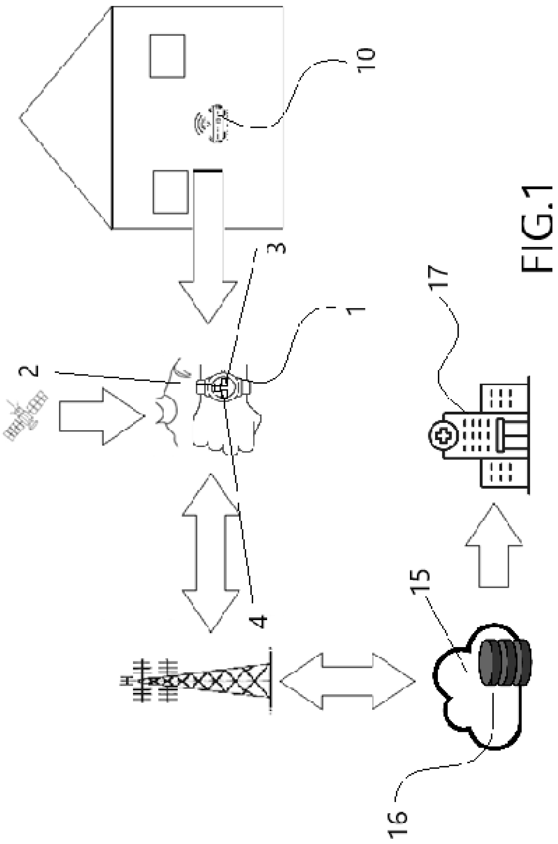

Figure 1: It shows a schematic diagram of the geolocation system in a distress situation which is the subject of the present invention.

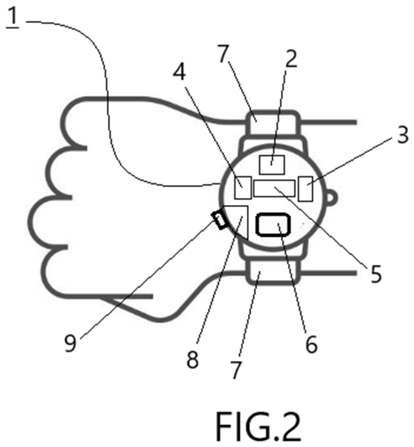

Figure 2: Shows a schematic image of the structure of a portable electronic device.

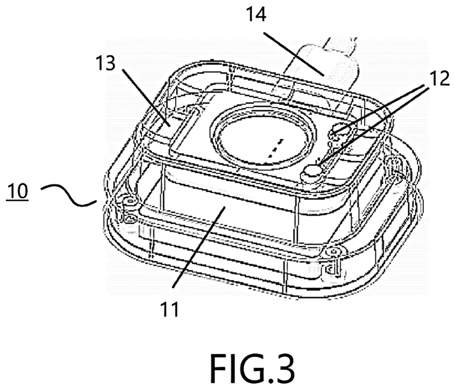

Figure 3: Shows a perspective image of a charging dock.

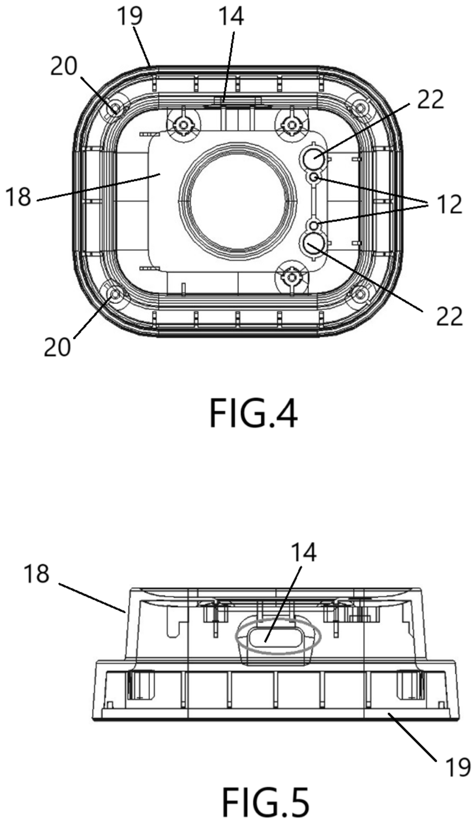

Figure 4: Shows an aerial view of the charging dock.
Figure 5: Shows a side view of the charging dock

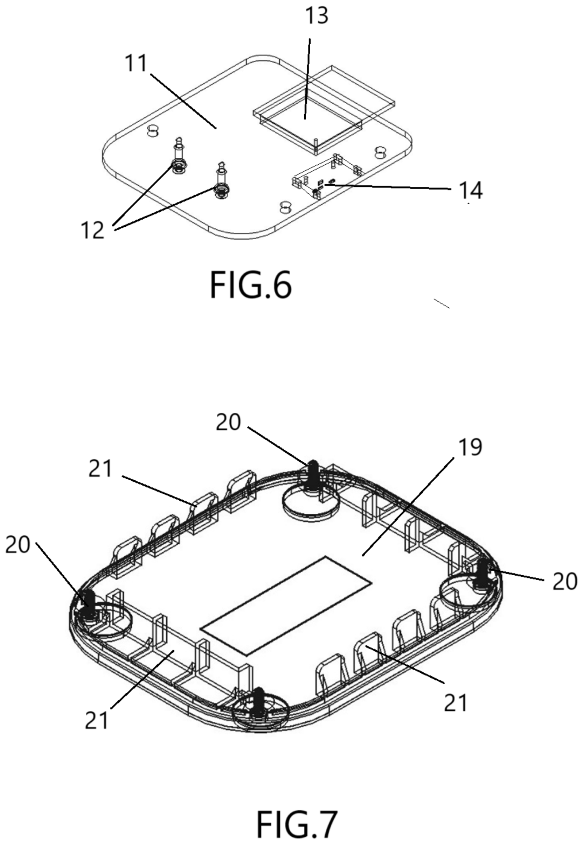

Figure 6: Shows a perspective image of the inside of the charging dock.
Figure 7: Shows a perspective image of a lower casing of the charging dock.

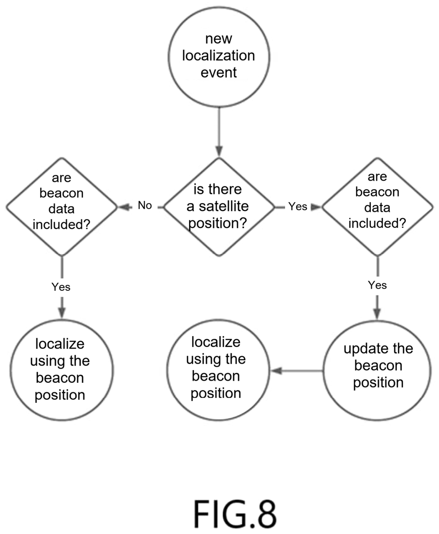

Figure 8: Shows a block diagram with the steps of a geolocation method in distress situations that is based on the use of the geolocation system.

### Detailed description of an embodiment of the invention

One embodiment of the geolocation system in distress situations that is the subject of the present invention has the particularity of comprising
an electronic device (1) worn by a user, which is an exemplary embodiment of a watch, comprising
   an antenna for receiving signals from satellite systems (2) such as GPS, GLONASS, Galileo or Beidou;
   an antenna for receiving signals from access points (3) such as WiFi or Bluetooth; and
   an antenna for sending and receiving mobile signals (4) for the transmission of position data and maintaining communication between the user and an assistance centre;
   a programmable control module (5), which manages the operation of the three antennas;
   it may comprise at least one emergency push button (6) that triggers an alarm signal, in connection with the control module
   means of attachment (7) to the user, which in the case of the watch is a strap adjustable to the wrist of the user
   a rechargeable electrical power supply module (8) and electrical connectors (9);
a charging dock (10), which is associated with the aforementioned portable electronic device and has its location registered, comprising:
   an electrical charger (11) comprising two contact points (12) with the electrical connectors of the electronic device
   a controller (13) of the WiFi type, which emits a WiFi identification message "BSSID" and a network name "SSID" to the electronic device
   and it may comprise an electrical connector (14) to the network that powers both the watch charger and the WiFi controller;
   magnets (22) which secure the position of the electronic device during charging and are located inside the charging dock;
   and it consists of an upper casing (18) and a lower casing (19) which are fastened together by screws (20), and may also comprise a system of clips (21) on their sides for such fastening, so as to create a closed casing that encloses and protects the other components; and
a cloud platform (15) comprising an association database (16) between beacons and geographic position, and which is in connection with an assistance centre (17) and/or emergency services, comprising: means for receiving the data that the electronic device has captured, compiled, and sent to the database; and a computer programme for geolocating the electronic device based on that data.

## Claims

1. A geolocation system in distress situations, **characterised in that** it comprises:
an electronic device (1) worn by a user that comprises: an antenna for receiving signals from satellite systems (2); an antenna for receiving signals from access points (3); an antenna for sending and receiving mobile signals (4) for the transmission of position data and maintaining communication between a user and an assistance centre; a programmable control module (5) that manages the operation of the three antennas; and a rechargeable electrical power supply module (8);
a charging dock (10), which is associated with said portable electronic device (1) and has its location registered, comprising: an electrical charger (11); and a WiFi type controller (13) that emits a WiFi identification message "BSSID" and a network name "SSID" to the electronic device (1); and
a cloud platform (15) comprising an association database (16) between beacons and geographical position and which is in connection with an assistance centre (17), the platform comprising: means for receiving the data that the electronic device (1) has captured, compiled, and sent to the database; and a computer programme for geolocating the electronic device based on that data.

2. A system according to claim 1, wherein the signals received by the antenna for receiving signals from satellite systems (2) are GPS, GLONASS, Galileo or Beidou signals.

3. A system according to claim 1, wherein the signals received by an antenna for receiving signals from access points (3) are WiFi or Bluetooth signals.

4. A system according to claim 1, wherein the electronic device (1) comprises a means of attachment (7) to the user.

5. A system according to claim 1, wherein the electronic device (1) is a watch, bracelet or pendant.

6. A system according to claim 1, wherein the electronic device (1) comprises at least one emergency push button (6) that activates an alarm signal and that is in connection with the control module.

7. A system according to claim 1, wherein the electronic device (1) comprises electrical connectors (9).

8. A system according to claim 1, wherein the WiFi type controller (13) emits a message every 60 milliseconds in a band ranging from 2426 Mhz to 2448 Mhz.

9. A system according to claim 1, wherein the electrical charger (11) comprises two points of contact points (12) with the electronic device (1).

10. A system according to claim 9, wherein the contact points (12) are of the "Pogo" type.

11. A system according to claim 1, wherein the controller (13) emits a unique "BSSID" identifier, and which is composed of a maximum of 6 octets.

12. A system according to claim 1, wherein the controller (13) emits an identifier "SSID" which is an arbitrary byte string c with a maximum of 32 bytes.

13. A system according to claim 1, wherein the charging dock (10) comprises an electrical connector (14) to the mains.

14. A system according to claim 13, wherein the electrical connector (14) is of the USB-C type.

15. A system according to claim 1, wherein the charging dock (10) comprises an upper casing (18) and a lower casing (19) which are fixed to each other.

16. A system according to claim 1, wherein the charging dock (10) internally comprises magnets (22) for positioning the electronic device during charging.

17. A geolocation method in distress situations, which is carried out using a system according to any one of claims 1 - 16, comprising the steps of
- sending a distress signal to the platform from the electronic device worn by the user;
- determining whether there is a satellite position
∘ if no, determining whether there is beacon data and performing geolocation using the position of the beacon
∘ if yes, determining whether there is beacon data, updating the position of the beacon, and performing geolocation using the satellite position and beacon position.
